# EUROPEAN PATENT APPLICATION

(11) **EP 2 320 292 A1**
(43) Date of publication of application: **11.05.2011**
(21) Application number: 09175106.5
(22) Date of filing: 05.11.2009
(51) Int. Cl.: G05D 23/19

(54) **Temperature control in a bed**

(71) Applicant: Koninklijke Philips Electronics N.V., 5621 BA Eindhoven (NL)
(72) Inventor: The designation of the inventor has not yet been filed
(74) Representative: Golla-Franz, Anke Lucia

(57) **Abstract**

The present invention provides a method for controlling the temperature in a bed. The method comprises the steps: Measuring at least two temperatures at different locations in the bed; determining whether at least one of said temperatures is the skin temperature of a person present in the bed; and controlling heating means to establish a preset temperature based on at least one skin temperature measurement. Furthermore, a system to carry out this method is provided.

## Description

### FIELD OF THE INVENTION

The invention relates to the field of temperature control in a bed. It provides a method and a system to allow for an efficient control of the temperature in a bed to provide an increased sleep quality.

### BACKGROUND OF THE INVENTION

Along with the increase of the life tempo, people do recognize more and more the importance of good sleep for their life. This is indicated by the growing number of the patients asking for medical help to treat insomnia, restless leg syndromes, apnea, snoring, and many other sleep disorders that were not recognized as disorder in earlier times. Also, it is now widely accepted that even healthy individuals feel the need to improve their sleep after having stressful dynamical life, travelling across the time zones, or lacking the normal daylight due to their lifestyle, or due to many other reasons.

While many aspects play a role for a good sleep quality, thermoregulation is of a high relevance. Basically, there are two important main temperatures present in day-night rhythms of an individual: skin and core body temperatures, both of which have a cyclic nature. During sleep, the typical heat production of the human body varies cyclically through the night from about 100 W in the evening to less than 50 W in the midnight and back to about 100 W again in the morning.

Paradoxically, for an optimal sleep, i.e. for best sleep quality, the skin temperature should be the highest at the time point of the lowest heat production of the body. Therefore, blankets or heated objects such as hot-water bags or electric blankets are commonly used to compensate for the smaller heat production of the body.

However, such conventional means to compensate for the smaller heat production all have the disadvantage of not taking into account that the heat production of the body changes during the night. Therefore, if e.g. an electric blanket is set to maximum heat this might be optimal for the period of lowest heat generation around midnight but lead to an uneasy sleep close to the time of getting up in the morning, when the heat production of the body has almost doubled. Thus, timing means are sometimes combined with the electric heating means or temperature sensors are attached to the individual to constantly measure the skin temperature.

However, such conventional solutions are still unsatisfactory. Timing devices do not observe the individual temperature changes of a person, while the temperature sensors attached to the individual are highly inconvenient for the person, e.g. restraining the movement, and thus lead to a decrease in sleep quality.

### SUMMARY OF THE INVENTION

It is an object of the invention to provide an improved method for controlling the temperature in a bed that is both taking into consideration the individual temperature changes of a person during the night and is convenient for the person to increase the quality of sleep.

It is a further object of the invention to provide a system to carry out the method according to the invention.

These objects are achieved by the method according to claim 1 and the corresponding system according to claim 9.

In particular, the present invention discloses a method for controlling the temperature in a bed, comprising the steps of : a) Measuring at least two temperatures at different locations in the bed; b) Determining whether at least one of said temperatures is the skin temperature of a person present in the bed; c) Controlling heating means to establish a preset temperature based on at least one skin temperature measurement.

Thus, the present invention is based on the key idea that the temperature in the bed is measured at more than one location and it is determined whether this measured temperature is the skin temperature of a person present in the bed. If this is the case, then these measured values can be utilized to control the heating system of the bed, preferably throughout the night, in order to constantly and individually provide the best temperature to achieve an optimal quality of sleep. Advantageously, no temperature sensor needs to be attached to the person in the bed but they are rather located in/on any part of the bed, e.g. in a blanket or pillow allowing for the measuring of the skin temperature of the individual moving freely in bed without having any devices on his/her body.

The bed according to the present invention can be any kind of bed or comparable piece of furniture known to the skilled person, i.e. any kind of appliance that can be used for sleeping purposes by one or more individuals. For example, the term "bed" also encompasses a couch, sofa, camp bed, cot, lounger, hospital bed and a mattress.

The measurement of the least two temperatures at two different locations in the bed can be accomplished by any means known to the skilled person. In one embodiment of the invention, temperature sensors are utilized to measure the temperature. The skilled person is aware of a multitude of suitable temperature sensors which are all meant to be encompassed by the present invention. Preferred temperature sensors include thermistors, more preferably NTC or PTC thermistors, silicon sensors, semiconductor sensors, sensors based on semiconductor integrated circuits, thermometers, sensors based on the detection of infra red (IR) radiation, optical tip temperature fibers, and optical distributed temperature fibers.

According to the invention the at least two sensors need to be placed at different locations in the bed. This is necessary in order to allow for a movement of the person during sleep while increasing the chance that at least one sensor is able to measure the skin temperature of the person.

In preferred embodiments, the temperature is measured at more than two different locations in the bed. More preferably, the temperature is measured at ≥ 2, ≥ 5, ≥10, ≥ 15, ≥ 20, ≥ 25, ≥ 30, ≥ 40, ≥ 2 and ≤ 100, ≥ 5 and ≤ 50, ≥ 5 and ≤ 40, ≥ 5 and ≤ 30, ≥ 5 and ≤ 20, ≥ 2 and ≤ 20 and ≥ 10 and ≤ 20 different locations in the bed. This has the advantage that more temperature sensors increase the chance that at least one sensor is able to measure the skin temperature of the person and that furthermore more than one measured value of the skin temperature can be used, e.g. in a calculation, to control the heating means. For a standard bed, i.e. a bed with a standard size for one person, a preferred range is ≥ and ≤ 20.

In another preferred embodiment of the invention the temperature is measured at more than two different locations in the bed, wherein the points of measurement are arranged in a grid, more preferably in a regular grid. A grid basically describes an arrangement of the point of measurement at predetermined locations, i.e. the distances between two given points of measurement are known. Advantageously, such an arrangement of, for example temperature sensors, combines an easy fabrication of the part of the bed comprising the temperature sensors while ensuring that at least one sensor is able to measure the skin temperature of the person present in the bed. In addition, an arrangement in a grid also offers the advantage that it is possible to determine which part of the body is measured. This is due to the fact that the shape of a human body, i.e. the shape of the extremities, the shape of the torso and head and the location of the joints is known. Therefore, if the points of measurement are arranged in a grid it will be possible to deduce at which locations of the body the temperature measurements are taken and/or if the person is lying prone, supine or on the side.

The temperature sensors, i.e. the points of measurement, can be placed at any suitable location in and/or on the bed. Preferably, the sensors are placed in and/or on a part of the bed that may be contacted by the person in the bed. In preferred embodiments, the sensors are placed in and/or on a mattress, a pillow, a blanket, a sheet, a mattress topper and/or an overlayer. Most preferably, the temperature measurement is carried out in the mattress and/or the mattress topper, i.e. the part of the bed, the person lies upon.

In another preferred embodiment of the invention, the temperature measurement is carried out in a region and/or a part of the bed where the body or an extremity of the person will be located. This has the advantage that better measuring results are achieved than with the measurement of the temperature in a location where the head of the person will be located. Most preferably, the temperature measurement is carried out in a region and/or a part of the bed where the body of the person will be located.

The determination of whether a measured temperature value is the skin temperature of a person present in the bed can be carried out by any means known to the skilled person. In one embodiment of the invention this determination is based on additionally measured or derived values from the sensor located in and/or on the bed. Such preferred values comprise pressure measurements, capacitive measurements or more preferably differences between the measured temperature and a preset temperature value.

Pressure measurements can, for example, be derived from pressure sensors, pressure transducers or pressure transmitters integrated in, combined with and/or brought into close proximity to the temperature sensors. Advantageously, if a pressure sensor associated with a given temperature sensor registers a change in pressure it may be derived whether the person has shifted its weight onto or off the temperature sensor. Thus, if it is determined that the person is located on the temperature sensor the measured temperature is most likely the skin temperature of the person.

Capacitive sensing can be employed to determine whether the person is positioned over a given temperature sensor associated with a capacitive sensor.

More preferably, the determination whether the measured temperature is the skin temperature of a person present in the bed is based on differences between the measured temperature value and a preset temperature value. This has the advantage that a cheap and effective solution is provided. The core structure of the calculation and/or comparison can be described as follows: at least two temperatures (tₖ) in bed are measured and compared with a given preset or suggested skin temperature tₚᵣₑₛₑₜ for the person. The value for tₚᵣₑₛₑₜ preferably changes over time, i.e. it is constantly adapted during the night to the optimal temperature for a given person. If the temperature difference between tₖ and tₚᵣₑₛₑₜ is small then the sensor is most likely in contact with or close to the skin, i.e. it is measuring the skin temperature. Thus, the provided algorithm analyzes the temperature data generated by the temperature measurement and extracts the information on the presence of a person and on the skin temperature of said person.

In preferred embodiments a small temperature difference Δt between tₖ and tₚᵣₑₛₑₜ is given, if | Δt | is ≥ 2 and ≤ 20 °C, preferably ≥ and ≤ °C, and more preferably > 5 and ≤ 10 °C.

In a further embodiment tₚᵣₑₛₑₜ is a preset skin temperature or a preset temperature within the bed.

In another embodiment of the invention, the preset temperature tₚᵣₑₛₑₜ is time dependent, i.e. it may vary throughout the night. In preferred embodiments tₚᵣₑₛₑₜ has a value that is close to a personal skin temperature time profile. Such personal skin temperature profiles are individual and may be readily determined for a given person by the skilled artisan.

Based on the determined skin temperature measurement(s) a heating means is consequently controlled to establish the preset temperature tₚᵣₑₛₑₜ in the bed.

The heating means may be any heating means known to the skilled person that is suitable to raise and/or lower the temperature in the bed. In this regard, it is explicitly stated that the heating means may also be used to cool down, i.e. to lower the temperature of the bed. Preferred heating means comprise electric heating means, tubes circulating heated and/or cooled fluids such as water, and/or peltier elements.

The heating means may be located at any suitable position in and/or on the bed that allow the raising, maintaining or lowering of the temperature of the bed. Preferred locations for the placement of the heating means are a part of the bed that may be contacted by the person in the bed, a mattress, a pillow, a blanket, a sheet, a mattress topper and/or an overlayer. Most preferably, the heating means is placed in the mattress, the mattress topper and/or the blanket.

In one embodiment of the invention the measured skin temperature is lower than the preset temperature and the heating means is controlled to raise the temperature in the bed. In another embodiment of the invention the measured skin temperature is higher than the preset temperature and the heating means is controlled to lower the temperature in the bed.

The control of the heating means can be affected in any suitable way known to the skilled person. In a preferred embodiment of the invention the control of the heating means is achieved by raising or lowering the frequency of heating phases within a heating cycle, i.e. by changing the frequency with which the heating means is turned on and/off. For example, an electric heating means may initially be set to a 1-minute heating circle with a heating phase of 20 seconds, followed by a non-heating phase of 40 seconds. If the determined skin temperature is found to be below the preset temperature this heating cycle may be changed to a heating phase of 40 seconds, followed by a non-heating phase of 20 seconds thus leading to a raise in temperature in the bed.

In another preferred embodiment of the invention the control of the heating means is achieved by raising or lowering the power used to drive the heating means, i.e. by changing the intensity with which the heating means is performing the heating. For example, an electric heating means may initially be set to heat with a power of 300 W. If the determined skin temperature is found to be above the preset temperature the power may be lowered to 100 W thus leading to a decrease of temperature in the bed.

In another preferred embodiment of the invention the control of the heating correlates with the temperature difference Δt between tₖ and tₚᵣₑₛₑₜ. In other words, if the temperature difference is small then the changes in the control of the heating element are likewise small and vice versa. For example, if a temperature difference Δt = tₖ - tₚᵣₑₛₑₜ of - 4° C is detected then the heating power may be increased from 100 W to 400 W, while if a Δt of only ― 2° C is detected the heating power may be increased from 100 W to 200 W.

The skilled person will be readily aware that combinations of all of the embodiments provided by the invention may likewise be employed, for example a control of frequency of heating phased combined with a control of the heating intensity.

In another embodiment of the invention the control of the heating means is based on a single measurement of the skin temperature of the person present in the bed, i.e. for example derived from a single temperature sensor. Preferably, however, the control of the heating means is based on ≥ measurements of the skin temperature of the person present in the bed. More preferably, the control of the heating means is based on ≥2, ≥ 3, ≥ 4, ≥5, ≥ , ≥ 7, ≥ 8, ≥ 9, ≥ 10, ≥ 2 and ≤ 20, ≥ 2 and ≤ 15, ≥ 2 and ≤ 10, ≥ 3 and ≤ 10, ≥ 5 and ≤ 10, ≥ 5 and ≤, or all measurements of the skin temperature of the person present in the bed. As described above, an arrangement of the temperature sensors in a grid is especially preferred.

If the control of the heating means is based on ≥ measurements of the skin temperature of the person present in the bed then preferably an average temperature is calculated from the single skin temperature readings.

In further preferred embodiments the skin temperature readings are weighted according to the part of the body they are derived from. Preferably, skin temperature readings from the torso of the person in bed are weighted more than those from the extremities and/or skin temperature readings from the extremities of the person in bed are weighted more than those from the head. More preferably, only skin temperatures from the torso, extremities and/or head are used. Even more preferably, only skin temperatures from the torso and/or extremities are used. Most preferably, only skin temperatures from the torso are used.

In another embodiment of the invention the control of the heating means is additionally based on ≥ 1 measurement of the temperature outside of the bed. While any suitable measurement of the temperature outside of the bed can be utilized, a preferred measurement is the measurement of the room temperature of the room the bed is located in. The additional measurement of the temperature outside of the bed has the advantage that the control of the heating element can be carried out more precisely. Individuals tend to favor different temperatures of the room for the night time. For example, some persons like to sleep with the window opened, some with the heating turned on. If the measured temperature outside of the bed is found to be relatively low then the heating means may, for example, be controlled in a way to anticipate an increased temperature loss and vice versa. In other words, the heating means may be controlled to heat more intensively, for example more often, at a lower frequency and/or with an increased heating power.

In another embodiment of the invention the method further comprises the step of: d) Controlling the heating means to establish a preset temperature based on at least one temperature measurement if no skin temperature of a person present in the bed is determined. There may be cases in which none of the temperature readings in step a) may be determined to be the skin temperature of a person present in the bed. This may, for example, be the case if the person has left the bed, is not close to a temperature sensor and/or the temperature difference Δt is yet to large. Therefore, if no skin temperature reading is present the control of the temperature in the bed is advantageously based on at least one of the temperature measurements derived from a temperature sensor.

As described for step c) above, the control of the heating means is preferably based on ≥ temperature measurements; reference is made to this passage of the invention. For example, the control of the heating means is preferably based on ≥2, ≥3, ≥ 4, ≥ 5, ≥ 6, ≥ 7, ≥ 8, ≥ 9, ≥ 10, ≥ 2 and ≤ 20, ≥ 2 and ≤ 15, ≥ 2 and ≤ 10, ≥ 3 and ≤ 10, ≥ 5 and ≤ 10, ≥ 5 and ≤ 8, or all temperature measurements.

The way the heating means are controlled based on the temperature measurements is likewise already described above. For example, the control of the heating means is achieved by raising or lowering the frequency of heating phases within a heating cycle and/or by raising or lowering the power used to drive the heating means.

In another embodiment of the invention the method further comprises a step of detecting the presence of a person in the bed, wherein at least one of the remaining steps of the method is only carried out if the presence of a person in the bed is detected. Advantageously, method is thus only carried out if a person is present in bed which improves both system-user interaction and energy saving.

The additional step of detecting the presence of a person in the bed may be carried out at any suitable time point. Preferably however, it is carried out as an initial step of of the method and at least one, more preferably all, of the remaining steps of the method are only carried out if the presence of a person in the bed is detected.

While only a single of the remaining steps of the method may be dependent on the detection of the presence of a person in the bed, preferably at least the controlling of the heating means (steps c) and/or d)) is dependent on said detection: this has the advantage that the step consuming the most energy is controlled. However, also steps a) and/or b) may depend on the detection of a person in the bed.

In another aspect the invention is directed to a system to carry out the method according to the invention. Preferably, a system for temperature control in a bed is disclosed comprising: a bed, at least two temperature sensors located at different locations in the bed, at least one heating means comprised by the bed and a processing unit, wherein the processing unit is adapted to determine whether at least one of the temperatures measured by the temperature sensors is the skin temperature of a person present in the bed and is adapted to control the heating means to establish a preset temperature based on at least one skin temperature measurement.

It will be apparent that all embodiments described above regarding the method according to the invention also apply for the system according to the invention and vice versa. The skilled person will be in a position to readily apply the features of the method according to the invention to the system according to the invention. However, in the following some of the embodiments of the system are explicitly disclosed.

The two temperature sensors can be any temperature sensores known to the skilled person. Preferred temperature sensors include thermistors, more preferably NTC or PTC thermistors, silicon sensors, sensors based on semiconductor integrated circuits, thermometers and sensors based on the detection of IR radiation optical tip temperature fibers, and optical distributed temperature fibers.

In preferred embodiments, more than two temperature sensors are located in the bed. More preferably, ≥ 2, ≥ 5, ≥ 10, ≥ 15, ≥ 20, ≥ 5, ≥ 0, ≥ 40, ≥ 2 and ≤ 100, ≥ 5 and ≤ 0, ≥ and ≤ 40, ≥ and ≤ 30, ≥ 5 and ≤ 0, and ≥ 0 and ≤ 20 temperature sensors are located at different locations in the bed. For a standard bed, i.e. a bed with a standard size for one person, a preferred range is ≥ and ≤ 20.

In another preferred embodiment the temperature sensors are arranged in a grid, more preferably in a regular grid.

In another embodiment of the invention the temperature sensors are placed at any suitable location in and/or on the bed. Preferably, the sensors are placed in and/or on a part of the bed that may be contacted by the person in the bed. In preferred embodiments, the sensors are placed in and/or on a mattress, a pillow, a blanket, a sheet, a mattress topper and/or an overlayer. Most preferably, the temperature sensors are placed in the mattress and/or the mattress topper, i.e. the part of the bed, the person lies upon.

The heating means may be any heating means known to the skilled person that is suitable to raise and/or lower the temperature in the bed. Heating means may also be used to actively cool down, i.e. to actively lower the temperature of the bed. Preferred heating means comprise electric heating means, tubes circulating heated and/or cooled fluids such as water, and/or peltier elements.

The heating means may be located at any suitable position in and/or on the bed that allow the raising, maintaining or lowering of the temperature of the bed. Preferred locations for the placement of the heating means are a part of the bed that may be contacted by the person in the bed, a mattress, a pillow, a blanket, a sheet, a mattress topper and/or an overlayer. Most preferably, the heating means is placed in the mattress, the mattress topper and/or the blanket.

The processing unit may be any suitable processing unit known to the skilled person. The processing unit is adapted to determine whether at least one of the temperatures measured by the temperature sensors is the skin temperature of a person present in the bed and it is adapted to control the heating means to establish a preset temperature based on at least one skin temperature measurement. For example, the processing unit may comprise a microprocessor that is adapted/programmed to carry out steps of the method according to the present invention, preferably the steps related to the determination if a measured temperature is the skin temperature of a person present in the bed and/or the control of the heating means.

In another embodiment the system further comprises pressure sensors as detailed above. Preferably, these sensors are combined with and/or brought into close proximity to the temperature sensors. The readings of the pressure sensors can be processed by the processing unit to determine whether a person is close to a temperature sensor and thus whether the reading of said temperature sensor is the skin temperature of the person.

In a further embodiment of the invention capacitive sensors are comprised by the system to determine whether the person is positioned over a given temperature sensor associated with a capacitive sensor. The readings of the capacitive sensors can be processed by the processing unit to determine whether a person is close to a temperature sensor and thus whether the reading of said temperature sensor is the skin temperature of the person.

In a preferred embodiment of the invention the processing unit is adapted to determine whether the measured temperature is the skin temperature of a person present in the bed based on differences between the measured temperature value and a preset temperature value. This preferred embodiment is disclosed in detail above regarding the method of the invention.

The processing unit may comprise inputs connected to the various sensors and/or outputs connected to the heating means.

In another embodiment of the invention the system furthermore comprises a heater control that is controlled by the processing unit and which, in turn, controls the heating means. The heater control may, for example, be a unit comprising heated or cooled water that may be circulated through the heating means. The heater control may also be a power supply for electric heating means. However, the heating control may be comprised by the processing unit and/or the processing unit may function as heating control, i.e. directly control the heating means.

In a further preferred embodiment of the invention the system additionally comprises a temperature sensor that is located outside of the bed. This additional temperature sensor may preferably be used to measure the room temperature of the room the bed is located in.

In a further preferred embodiment of the invention the system additionally comprises a presence sensor. Any presence sensor known to the skilled person that allows the detection of the presence or absence of a person is meant to be encompassed by the present invention. Preferably the presence sensor is a pressure, temperature, motion, and/or IR sensor to detect the presence of a person in the bed. In a preferred embodiment of the invention, at least one of the temperature sensors used for the detection of the skin temperature is employed as presence sensor. The presence sensor is preferably connected to the processing unit and/or the heater control. The processing unit can preferably be adapted to only carry out at least one of the steps of the method if the presence of a person in the bed is detected. The heater control can preferably be adapted to only control the heating element if the presence of a person in the bed is detected.

### BRIEF DESCRIPTION OF THE DRAWINGS

These and other aspects of the invention will be apparent from and elucidated with reference to the embodiments described hereinafter.

In the drawings:

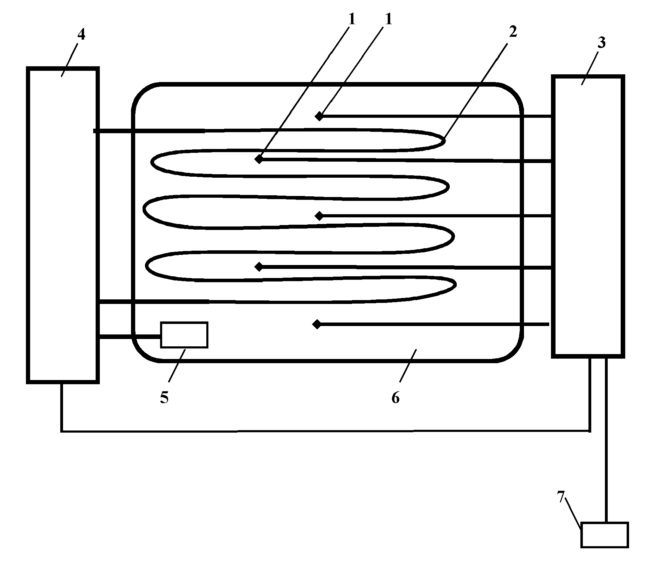

Fig. 1 shows one embodiment of the system according to the invention.

### DETAILED DESCRIPTION OF EMBODIMENTS

Fig. 1 shows a system for temperature control in a bed according to the invention.

The system comprises five temperature sensors (1) that are positioned in the mattress (6) of a bed. The temperature sensors are positioned in grid. They are placed at predetermined locations and regular positions and the distances between two given sensors are known.

In addition, the temperature sensors are positioned in a region of the mattress, where the body, preferably the torso, of a person lying down will most likely be positioned. This arrangement the temperature sensors allows for an easy fabrication of the mattress. Furthermore, due to the positioning of the temperature sensors chances are increased that at least one temperature sensor is able to measure the skin temperature of the torso region of a person present in the bed.

The system further comprises a heating means (2) that is embodied as an electric heating means comprised by the mattress (6) of the bed. The electric heating means is covering almost the whole area of the mattress and is arranged in a meandering way to ensure an equal distribution of heat.

The heating electric heating means (2) is connected to a heater control (4). Heater control (4) is basically a power supply and used to drive the heating means, i.e. to provide electrical power to the heating means which, in turn, will heat up.

The heater control (4) is connected to an output of the processing unit (3) which controls the heater control. The processing unit has various inputs connected to the five temperature sensors (1). The reading of each of the temperature sensors is thus provided to the processing unit comprising a microprocessor and the processing unit is adapted to process these readings according to the method of the present invention.

For example, the processing unit is adapted to determine ― based on the differences between the measured temperature value of a single temperature sensor and a preset temperature value, whether the measured temperature of is the skin temperature of a person lying in the bed. Thus, the provided processing unit processes the temperature data generated by the temperature sensors and extracts the information on the presence of a person and on the skin temperature of said person.

Based on the results of this processing the processing unit then instructs the heating unit to control the heating means.

The system furthermore comprises a presence detector (5) that is likewise comprised by the mattress (6) of the bed. The presence detector is a pressure detector that will register whether a preset mass is present on the mattress, i.e. whether a person is lying in the bed. The presence detector is directly connected to the heater control (4) and will turn of the heater control if no person is detected lying in the bed. This has the advantage that the heater control, which is the most energy consuming part of the system, will not be operated if nobody is present in the bed. Thus, energy is conserved.

In addition the system furthermore comprises an additional temperature sensor (7) connected to the processing unit (4). The additional temperature sensor is not integrated into the mattress but positioned to measure the temperature of the room the bed is located in.

In the following the method according to the invention will be illustrated based on the exemplary embodiment of the system depicted in Fig. 1.

A person enters the room and lays down in the bed comprising the mattress (6). The presence detector (5) registers the weight of the person acting on the mattress and powers on the heater control (4) connected to the heating element (2) and the processing unit (3).

All five temperature sensors (1) provide their reading to the processing unit, i.e. five temperature values are supplied to the processing unit at the same time. The processing unit (3) then tries to determine if any of the five temperature reading is the skin temperature of the person present in the bed. For this purpose, the temperature readings are compared to a preset or suggested skin temperature tₚᵣₑₛₑₜ for the person. The determination is based on the assumption that if a small difference between preset temperature and measured temperature is calculated then a given sensor is measuring the skin temperature of the person.

Initially, only those sensors that are close to the person, for example those sensors that are covered by the torso of the person, will output a temperature reading to the processing unit that is close to the preset skin temperature. The processing unit will determine which of the sensors are covered by the torso of the person, i.e. which of the sensors are measuring the skin temperature of the person and base the control of the heating only on the reading provided by these temperature sensors.

The processing unit (3) then instructs the heater control (4) to control the heating means (2) and thus to raise the temperature within the bed. For this purpose, the processing unit additionally analyzes the temperature reading of the external temperature sensor (7) that is measuring the room temperature. As the room temperature is measured to be more than 10 °C below the preset temperature the heater control is instructed to power the heating element with a higher power.

In particular, the frequency of the heating phases within a heating cycle is raised and the heating power output from the heating control to the heating means is increased.

After a while, the temperature readings for the skin temperature may reach the preset value and the temperature within the bed will no longer be increased.

If the person in the bed moves during the night, then different temperature sensors may be covered by its torso. However, due to the method of the invention the processing unit will be able to determine which of the sensors is presently covered by the person and which of the sensors is thus providing the temperature reading of the skin temperature of that person.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope.

## Claims

1. A method for controlling the temperature in a bed, comprising the steps of:
a) Measuring at least two temperatures at different locations in the bed;
b) Determining whether at least one of said temperatures is the skin temperature of a person present in the bed;
c) Controlling heating means (2) to establish a preset temperature based on at least one skin temperature measurement.

2. The method according to claim 1, wherein the at least two temperatures are measured by temperature sensors located in and/or on a mattress (6), a pillow, a blanket, a sheet, a mattress topper and/or an overlayer of the bed.

3. The method according to claim 1, wherein the at least two temperatures are measured by temperature sensors (1) arranged in a grid.

4. The method according to claim 1, wherein the determination is based on capacitive measurment, pressure measurement and/or the difference between the measured temperature value and a preset temperature value.

5. The method according to claim 1, wherein the control of the heating means is based on more than one skin temperature measurements.

6. The method according to claim 1, wherein the control of the heating means is additionally based on at least one measurement of the temperature outside of the bed.

7. The method according to claim 1, further comprising the step of:
d) Controlling the heating means to establish a preset temperature based on at least one temperature measurement if no skin temperature of a person present in the bed is determined.

8. The method according to claim 1, further comprising a step of detecting the presence of a person in the bed, wherein at least one of the remaining steps of the method is only carried out if the presence of a person in the bed is detected.

9. A system for temperature control in a bed comprising: a bed, at least two temperature sensors (1) located at different locations in the bed, at least one heating means (2) comprised by the bed and a processing unit (3),
wherein the processing unit is adapted to determine whether at least one of the temperatures measured by the temperature sensors is the skin temperature of a person present in the bed and is adapted to control the heating means to establish a preset temperature based on at least one skin temperature measurement.

10. The system according to claim 9, wherein the temperature sensors are located in and/or on a mattress (6), a pillow, a blanket, a sheet, a mattress topper and/or an overlayer of the bed.

11. The system according to claim 9, wherein the temperature sensors (1) are arranged in a grid.

12. The system according to claim 9, further comprising an additional temperature sensor (7) adapted to measure the temperature outside of the bed.

13. The system according to claim 9, further comprising a presence sensor (5), preferably selected from the group consisting of a pressure sensor, a temperature sensor, a motion sensor, and/or an IR sensor.
